(19) Europäisches Patentamt
European Patent Office
Office européen des brevets

(11) **EP 3 627 108 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **19191481.1**

(22) Anmeldetag: **13.08.2019**

(51) Internationale Patentklassifikation (IPC):
**G01C 21/34** *(2006.01)* **B60W 30/00** *(2006.01)*
**B62D 15/02** *(2006.01)* **B60W 60/00** *(2020.01)*

(52) Gemeinsame Patentklassifikation (CPC):
**G01C 21/3461; B60W 60/0011; B60W 60/0021; B62D 15/025; B62D 15/0285**

(54) **VERFAHREN ZUR TRAJEKTORIENPLANUNG EINES BEWEGLICHEN OBJEKTES**

METHOD FOR PLANNING THE TRAJECTORY OF A MOBILE OBJECT

PROCÉDÉ DE PLANIFICATION DE TRAJECTOIRE D'UN OBJET MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018 DE 102018215949**

(43) Veröffentlichungstag der Anmeldung:
**25.03.2020 Patentblatt 2020/13**

(73) Patentinhaber: **Robert Bosch GmbH**
**70442 Stuttgart (DE)**

(72) Erfinder:
• **Buerger, Mathias**
**70563 Stuttgart (DE)**
• **Schillinger, Philipp Christian**
**71272 Renningen-Malmsheim (DE)**
• **Schlueter, Henning**
**71711 Steinheim an der Murr (DE)**

(56) Entgegenhaltungen:
**US-A1- 2016 176 397     US-A1- 2017 277 195**

• **REYES CASTRO LUIS I ET AL: "Incremental sampling-based algorithm for minimum-violation motion planning", 52ND IEEE CONFERENCE ON DECISION AND CONTROL, IEEE, 10 December 2013 (2013-12-10), pages 3217 - 3224, XP032576831, ISSN: 0743-1546, ISBN: 978-1-4673-5714-2, [retrieved on 20140307], DOI: 10.1109/CDC.2013.6760374**

• **MARCUS NOLTE ET AL: "Representing the Unknown - Impact of Uncertainty on the Interaction between Decision Making and Trajectory Generation", ARXIV.ORG, CORNELL UNIVERSITY LIBRARY, 201 OLIN LIBRARY CORNELL UNIVERSITY ITHACA, NY 14853, 24 April 2018 (2018-04-24), XP081178111**

• **SCHLUTER HENNING ET AL: "On the Design of Penalty Structures for Minimum-Violation LTL Motion Planning", 2018 IEEE CONFERENCE ON DECISION AND CONTROL (CDC), IEEE, 17 December 2018 (2018-12-17), pages 4153 - 4158, XP033505047, [retrieved on 20190118], DOI: 10.1109/CDC.2018.8619148**

• **WOLF PETER ET AL: "Adaptive Behavior Generation for Autonomous Driving using Deep Reinforcement Learning with Compact Semantic States", 2018 IEEE INTELLIGENT VEHICLES SYMPOSIUM (IV), IEEE, 26 June 2018 (2018-06-26), pages 993 - 1000, XP033423326, [retrieved on 20181018], DOI: 10.1109/ IVS.2018.8500427**

## Beschreibung

Technisches Gebiet

Die Erfindung betrifft allgemein Verfahren zur regelbasierten Trajektorienplanung von beweglichen Objekten unter Berücksichtigung von zulässigen Regelverletzungen.

Technischer Hintergrund

Für die regelbasierte Trajektorienplanung wird in der Regel eine Menge an vorgegebenen Regeln berücksichtigt, um eine sinnvolle Trajektorie zwischen zwei Positionen zu ermitteln. Beispielsweise kann für die Regelbeschreibung eine logische Beschreibungssprache, die sogenannte Linear Temporal Logic (LTL) verwendet werden, die eine Aufgabenspezifikation in Form einer LTL-Spezifikation abbildet. Aus der LTL-Spezifikation können anhand der Regeln zulässige Bewegungstrajektorien geplant und optimiert werden.

Die Trajektorienplanung für bewegliche Objekten in regelbasierten Planungssystemen basiert auf der Berechnung einer Kostenfunktion, mit deren Hilfe eine iterative Optimierung der Trajektorie erfolgt. Die Optimierung wird in der Regel je nach Optimierungsziel basierend auf einer Minimierung der für die Bewegung des beweglichen Objekts entlang der Trajektorie benötigten Zeit, des benötigten Energieverbrauchs oder dergleichen durchgeführt. Jedoch besteht ein Problem darin, eine gültige Kostenfunktion zu definieren, die den Fall berücksichtigt, dass eine verletzbare Regel verletzt wird. Die Parametrisierung der Kosten für das Verletzen einer Regel stellt dabei eine besondere Schwierigkeit dar.

Beispielsweise ist aus L. I. Reyes Castro et al., "Incremental sampling-based algorithm for minimum-violation motion planning", 52nd IEEE Conference on Decision and Control, December 2013, S. 3217 bis 3224, eine Trajektorienplanungstechnik bekannt, bei der eine optimale Bewegungstrajektorie bei sich widersprechenden Befahrregeln ermittelt wird, indem die Kosten für eine Regelverletzung entsprechenden Regeln zugeordnet werden.

Die Druckschrift C.-I. Vasile et al., "Minimum-violation scLTL motion planning for mobility-on-demand", IEEE International Conference on Robotics and Automation (ICRA), May 2017, pages 1481 bis 1488 offenbart zusätzlich, die Trajektorienplanung zu integrieren, wobei Kosten für die Verletzung einer Regel zugeordnet werden, wenn eine Regel nicht durch eine vorgegebene Menge von syntaktisch scLTL-Regeln interpretiert werden kann.

Es besteht daher ein Bedarf darin, für ein Trajektorienbestimmungsverfahren Verletzungskosten für die Verletzung einer Regel bei einer Trajektorienplanung anzugeben.

Offenbarung der Erfindung

Erfindungsgemäß sind ein Verfahren zum Bestimmen einer Bewegungstrajektorie für ein bewegliches Objekt gemäß Anspruch 1 sowie ein Verfahren zum Führen eines beweglichen Objekts, eine Vorrichtung und ein bewegliches Objekt gemäß den nebengeordneten Ansprüchen vorgesehen.

Weitere Ausgestaltungen sind in den abhängigen Ansprüchen angegeben.

Gemäß einem ersten Aspekt ist ein computerimplementiertes Verfahren zum Bestimmen einer Bewegungstrajektorie für ein bewegliches Objekt, insbesondere eines Fahrzeugs, in einem regelbasierten Trajektorienplanungssystem vorgesehen, wobei eine Trajektorienplanung basierend auf einer Minimierung von Gesamtkosten gemäß einer Kostenfunktion durchgeführt wird, um die Bewegungstrajektorie zu bestimmen, wobei die Kostenfunktion Verletzungskosten berücksichtigt, die sich für jeden Trajektorienabschnitt der Bewegungstrajektorie aus einer etwaigen jeweiligen Verletzung einer oder mehrerer verletzbaren Regeln bezüglich des Trajektorienabschnitts ergeben,

wobei die Regelverletzung eine Zustandsregelverletzung und eine Übergangsregelverletzung umfasst, wobei die Zustandsregelverletzung eine Verletzung einer Zustandsregel angibt, die einen unzulässigen Zustand des beweglichen Objekts angibt, und die Übergangsregelverletzung eine Verletzung einer Übergangsregel angibt, die einen unzulässigen Zustandsübergang des betrachteten Trajektorienabschnitt der Bewegungstrajektorie, für welchen die Übergangsregelverletzung vorliegt, angibt,
wobei der Zustandsregelverletzung ein zeitabhängiger Kostenbetrag der Verletzungskosten und der Übergangsregelverletzung ein fester, insbesondere zeitunabhängiger Kostenbetrag der Verletzungskosten zugeordnet ist, so dass die Gesamtkosten für eine Bewegungstrajektorie für jeden Trajektorienabschnitt, der eine verletzbare Regel verletzt, von dem der verletzten Regel zugeordneten zeitabhängigen oder festen Kostenbetrag abhängen.

Die Ermittlung von optimierten Bewegungstrajektorien ist in der Regel ein iterativer Prozess, bei dem Kosten, die gemäß einer vorgegebenen Kostenfunktion ermittelt werden, minimiert werden. D.h. es wird eine Bewegungstrajektorie aus einer Mehrzahl von Trajektorienkandidaten ausgewählt, für die die geringsten Kosten ermittelt werden.

Die Kostenfunktion kann gemäß einem Optimierungsziel definiert sein, das in der Regel zumindest eine zeitbasierte Komponente (insbesondere abhängig von der Zeit zum Bewältigen der betreffenden Trajektorie) aufweist. So kann das Optimierungsziel die Minimierung der Zeit bis zum Erreichen des Ziels, eine Reduzierung des Energieverbrauchs, der ebenfalls zeitabhängig ist, eine Reduzierung der Schadstoffemissionen und dergleichen sein.

Die der Trajektorienplanung zugrundeliegende Regelbeschreibung definiert zulässige und unzulässige Systemzustände basierend auf der Formulierung von Regeln. Die Regelbeschreibung umfasst einen Satz von Regeln, die verletzbare Regeln und nicht verletzbare Regeln umfassen können. Die Ermittlung der Trajektorienkandidaten berücksichtigt, dass die nicht verletzbaren Regeln unbedingt eingehalten werden, und dass möglichst die Verletzung von verletzbaren Regeln vermieden wird.

Die Angabe von Regeln als verletzbar ermöglicht es der Trajektorienplanung, ggfs. eine oder mehrere der verletzbaren Regeln zu verletzen und die Regelverletzung durch zusätzliche Kosten in der zugrundeliegenden Kostenfunktion zu berücksichtigen. Dazu werden die Systemzustände und Übergänge zwischen Systemzuständen, die eine Regelverletzung bewirken, entsprechend zusätzlich mit unterschiedlichen Verletzungskosten versehen. Insbesondere werden Regelverletzungen, die Zustandsübergänge betreffen mit zeitunabhängigen festen Kostenbeträgen (Verletzungskosten) und Regelverletzungen, die nicht zulässige Systemzustände betreffen, mit zeitabhängigen Kostenbeträgen (Verletzungskosten) versehen. Aus einer Multiplikation der zeitabhängigen Verletzungskosten mit einer Zeitdauer, die der Zeitdauer des Systemzustands entspricht, während der die Trajektorienplanung Trajektorienabschnitte vorsieht, auf denen eine Regelverletzung vorliegt, können die entsprechenden Verletzungskosten ermittelt werden.

Weiterhin kann der zeitabhängige Kostenbetrag durch Multiplikation mit einer Zeitdauer ermittelt werden, die zum Bewegen des Objektes entlang des betreffenden Trajektorienabschnittes benötigt wird.

Es kann vorgesehen sein, dass die Trajektorienplanung die Ermittlung mehrerer Trajektorienkandidaten umfasst, aus denen derjenige Trajektorienkandidat als Bewegungstrajektorie ausgewählt wird, der die geringsten Gesamtkosten aufweist.

Gemäß einer Ausführungsform kann die Trajektorienplanung ein abtastbasiertes Suchverfahren, insbesondere ein RRT*-Verfahren umfassen. Bekannte Trajektorienplanungsverfahren umfassen allgemein Verfahren, die bereits während des bzw. für das Erstellen der Bewegungstrajektorienkandidaten die jeweiligen Kosten für Trajektorienabschnitte berücksichtigen. So kann beispielsweise bei dem Rapidly-Exploring-Random Trees Verfahren (RRT-Verfahren) vorgesehen sein, basierend auf der Erstellung eines Zufallsbaumes die jeweiligen Kosten des Trajektorienabschnitts zu berücksichtigen. Dabei wird die Trajektorie beginnend von einem Startpunkt zur Erfüllung einer Endbedingung inkrementell entwickelt, und die jeweiligen Kosten der Trajektorienabschnitte werden aufsummiert, um die Gesamtkosten zur Bewertung der Trajektorie zu erhalten.

Insbesondere kann die Trajektorienplanung das Erstellen eines Baumes umfassen, dessen Knoten Zustände und/oder Positionen des Objekts angeben und dessen Verbindungen Trajektorienabschnitte zwischen den Positionen der betreffenden Knoten angeben, wobei die Erstellung des Baumes folgende Schritte umfasst:

- Bereitstellen eines neuen Knotens, der einer Abtastposition des Objektes entspricht,
- Bestimmen von mehreren Pfaden von dem neuen Knoten zu dem Anfangsknoten des Baumes;
- Ermitteln von Gesamtkosten für die mehreren Pfade;
- Verbinden des neuen Knotens mit demjenigen Vorgängerknoten, der dem Pfad mit den geringsten Gesamtkosten angehört.

Es kann vorgesehen sein, dass für bereits gesetzte Knoten mithilfe der Kostenfunktion überprüft wird, ob diese durch den neuen Knoten mit geringeren Kosten erreicht werden können, und wobei, wenn dies der Fall ist, diese mit dem neuen Knoten verbunden werden.

Weiterhin kann die Kostenfunktion gemäß einem Optimierungsziel formuliert werden, das die Zeitdauer zum Befahren der jeweiligen Trajektorienabschnitt berücksichtigt.

Gemäß einem weiteren Aspekt ist ein Verfahren zum Führen eines beweglichen Objekts entlang einer Bewegungstrajektorie vorgesehen, die gemäß dem obigen Verfahren ermittelt wird.

Insbesondere können abhängig von der Bewegungstrajektorie Lenkeingriffe und Vorwärtsbewegungen des beweglichen Objekts gesteuert werden.

Alternativ können abhängig von der Bewegungstrajektorie Fahranweisungen zum Führen des es beweglichen Objekts, insbesondere in Form von Navigationsanweisungen durch ein Navigationssystem, ausgegeben werden.

Gemäß einem weiteren Aspekt ist eine Vorrichtung zum Bestimmen einer Bewegungstrajektorie für ein bewegliches Objekt, insbesondere ein Fahrzeug, in einem regelbasierten Trajektorienplanungssystem vorgesehen, wobei die Vorrichtung ausgebildet ist, eine Trajektorienplanung basierend auf einer Minimierung von Gesamtkosten gemäß einer Kostenfunktion durchzuführen, um die Bewegungstrajektorie zu bestimmen, wobei die Kostenfunktion Verletzungskosten berücksichtigt, die sich für jeden Trajektorienabschnitt der Bewegungstrajektorie aus einer etwaigen jeweiligen Verletzung einer oder mehrerer verletzbaren Regeln bezüglich des Trajektorienabschnitts ergeben, wobei die Regelverletzung eine Zustandsregelverletzung und eine Übergangsregelverletzung umfasst, wobei die Zustandsregelverletzung eine Verletzung einer Zustandsregel angibt, die einen unzulässigen Zustand des beweglichen Objekts angibt, und die Übergangsregelverletzung eine Verletzung einer Übergangsregel angibt, die einen unzulässigen Zustandsübergang des betrachteten Trajektorienabschnitt der Bewegungstrajektorie, für welchen die Übergangsregelverletzung vorliegt, angibt, wobei der Zustandsregelverletzung ein zeitabhängiger Kostenbetrag der Verletzungskosten und der Übergangsregelverletzung ein fester, insbesondere zeitunabhängiger Kostenbetrag der Verletzungskosten zugeordnet ist, so dass die Gesamtkosten für eine Bewegungstrajektorie für jeden Trajektorienabschnitt, der eine verletzbare Regel verletzt, von dem der verletzten Regel zugeordneten zeitabhängigen oder festen Kostenbetrag abhängen.

Gemäß einem weiteren Aspekt ist ein bewegliches Objekt, insbesondere Fahrzeug, mit der obigen Vorrichtung, einem Antriebssystem, einem Lenksystem und einer Sensorik zur Erfassung der Umgebung des Objekts vorgesehen, wobei die Vorrichtung abhängig von Umgebungszuständen, insbesondere Positionen von Umgebungsobjekten und Umgebungsbereichen, das Antriebssystem und das Lenksystem ansteuert, um das Objekt entlang der bestimmten Bewegungstrajektorie zu bewegen.

Bei dem beweglichen Objekt kann es sich neben einem Fahrzeug auch um einen insbesondere automatisierten oder teilautomatisierten Roboter, um eine bewegliche insbesondere automatisierte oder teilautomatisierte Produktionsmaschine oder ein bewegliches insbesondere automatisiertes oder teilautomatisiertes Werkzeug handeln.

Kurzbeschreibung der Zeichnungen

Ausführungsformen werden nachfolgend anhand der beigefügten Zeichnungen näher erläutert. Es zeigen:

Figur 1      eine schematische Darstellung eines beweglichen Objekts, für das eine Trajektorienplanung ausgeführt werden soll;

Figur 2      ein Flussdiagramm zur Veranschaulichung eines Verfahrens zum Durchführen einer Trajektorienplanung;

Figur 3      ein Flussdiagramm zur Veranschaulichung eines RRT*-Verfahrens zum Durchführen einer Trajektorienplanung;

Figur 4      beispielhafte Trajektorien für verschiedene Regelgewichtungen bei zwei Regeln; und

Figur 5      beispielhafte Trajektorien für verschiedene Regelgewichtungen bei einer weiteren Regel.

Beschreibung von Ausführungsformen

Nachfolgend wird ein Verfahren beschrieben, mit dem für ein bewegliches Objekt eine Trajektorienplanung basierend auf einer vorgegebenen Regelbasis vorgenommen werden kann. Dabei soll das Optimierungsziel der Zeit zum Erreichen des Ziels entsprechen. Die nachfolgende Beschreibung erfolgt am Beispiel einer Trajektorienplanung für ein Fahrzeug, das einen Parkplatz über eine Ausfahrt auf einer bestimmten Fahrspur verlassen soll. Die Trajektorienplanung soll eine Bewegungstrajektorie des Fahrzeugs bestimmen, entlang der das Fahrzeug möglichst schnell unter Beachtung von vorgegebenen Bewegungsregeln geführt werden soll. Zudem sind nicht befahrbare Bereiche angegeben, die beispielsweise Positionen von anderen Fahrzeugen oder Bebauungen angeben können. Während die Bewegungsregeln als verletzbare Regeln angegeben sind, d. h. als Regeln, die gegebenenfalls unter Berücksichtigung eines Nachteils bei einer Kostenfunktion der Trajektorienplanung übergangen werden können, stellen die Nichtbefahrbarkeitsregeln nicht verletzbare Regeln dar, da Bebauungen oder sonstige Hindernisse in der Realität nicht überfahren werden können.

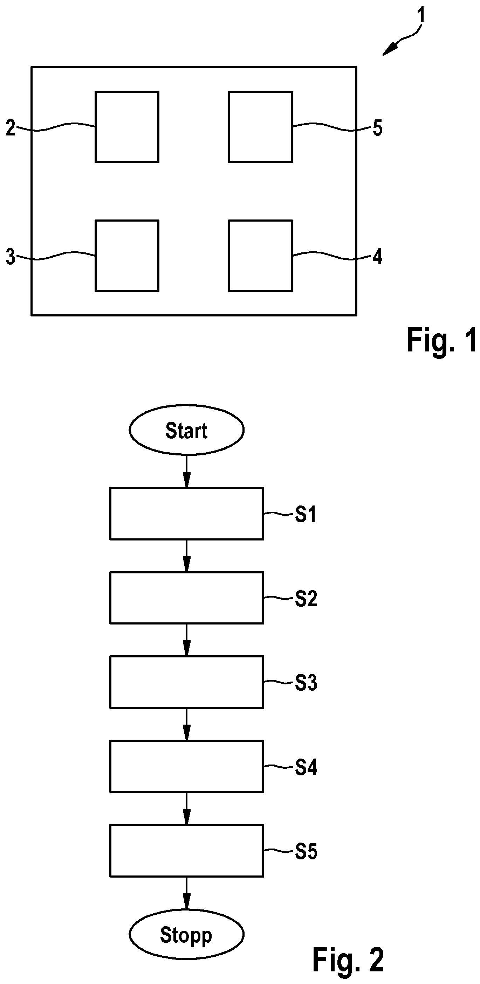

Figur 1 zeigt eine schematische Darstellung eines beweglichen Objekts, das als ein Fahrzeug 1 ausgebildet sein kann. Das Fahrzeug 1 kann eine Steuereinheit 2 aufweisen, die zur Durchführung der Trajektorienplanung und Ausführung einer ermittelten Bewegungstrajektorie ausgebildet ist. Die Steuereinheit 2 kann zur Durchführung einer Bewegung das Fahrzeug 1 über Ansteuerungen und Eingriffe in ein Antriebssystem 3 und in ein Lenksystem 4 steuern. Dazu können Lenkeingriffe und Vorwärtsbewegungen variabel in an sich bekannter Weise zum Abfahren einer ermittelten Bewegungstrajektorie vorgegeben werden.

Zur Steuerung des Fahrzeugs 1 können mithilfe einer Sensorik 5 Umgebungszustände erfasst werden. Die Sensorik 5 kann beispielsweise eine Kamera, andere zur Objektdetektion in der Umgebung des Fahrzeugs verwendbare Sensorik, wie beispielsweise Ultraschallsensorik und dergleichen, umfassen. Mithilfe der Sensorik 5 können Positionen von Umgebungsobjekten und Umgebungsbereichen (Fahrbahn, Grünfläche usw.) erkannt und identifiziert werden, so dass eine Umgebungskarte abhängig von Bereichen, die nicht befahren können, ermittelt werden kann und diese als Grundlage für Nichtbefahrbarkeitsregeln herangezogen werden kann.

Ausgangspunkt des nachfolgend beschriebenen Verfahrens ist eine Aufgabenspezifikation in Form einer Linear Temporal Logic (LTL), insbesondere einer co-safe Linear Temporal Logic (scLTL). Diese stellt eine Beschreibungssprache für eine Aufgabenspezifikation einer zu lösenden Aufgabe dar, die zeitliche Modalitäten aufweist. Jede scLTL-Aufgabenspezifikation kann in einen deterministischen endlichen Automaten übersetzt werden.

In Figur 2 ist ein Flussdiagramm zur Veranschaulichung des Verfahrens zum Durchführen der Trajektorienplanung dargestellt.

In Schritt S1 werden aus der durch die Sensorik erfassten Umgebungskarte, einer aus einem Kartenspeicher abrufbaren Umgebungskarte und einer vorgegebenen LTL-Beschreibung eine Regelbasis für das Bewegen des Fahrzeugs 1 konstruiert werden. Eine Regelbasis kann beispielsweise ausgedrückt werden:

1. Aus der Umgebungskarte angegebene nicht befahrbar Bereiche dürfen nicht überfahren werden.
2. Wenn auf Fahrspur a, wechsle nicht zur Fahrspur b.
3. Fahre nicht auf einer Fahrspur in entgegengesetzter Fahrtrichtung.

Diese Regelbasis umfasst mit Regel 1 eine nicht-verletzbare Regel, da die Trajektorienplanung unter keinen Umständen vorsehen darf, dass Objekte in der Fahrzeugumgebung überfahren werden dürfen.

Regeln 2 und 3 stellen dagegen verletzbare Regeln dar, die unter Umständen übergangen bzw. verletzt werden dürfen.

In Schritt S2 wird eine Trajektorienplanung durchgeführt. Die Trajektorienplanung kann entsprechend verschiedenen Verfahren, die aus dem Stand der Technik an sich bekannt sind, durchgeführt werden. Die Verfahren ermitteln in der Regel eine Mehrzahl K von Trajektorienkandidaten.

In Schritt S3 werden die Kosten für jeden der Trajektorienkandidaten gemäß einer vorgegebenen Kostenfunktion ermittelt. Jeder Trajektorienkandidat umfasst eine Mehrzahl N von sich aneinander anschließenden Trajektorienabschnitte, dessen jeweilige Kosten TK berechnet und für jeden Trajektorienkandidaten aufsummiert werden.

Die Kostenfunktion kann entsprechend:

$$TK_{k \in 1 \ldots K} = \sum_{i=1}^{N} \left( b \cdot T_i + \sum_{r=1}^{R} VK_{fix,i,r} + VK_{var,i,r} \cdot T_i \right)$$

für jede der K Trajektorienkandidaten bestimmt werden.

Dabei entsprechen die herkömmlichen Kosten für das Befahren jedes Trajektorienabschnitts $b \cdot T_i$. Damit sind die Bewegungskosten proportional zu der für das Befahren des jeweiligen Trajektorienabschnitts benötigten Zeitdauer.

Die Verletzungskosten VK für eine Verletzung einer verletzbaren Regel werden entsprechend für jeden der Trajektorienabschnitte ermittelt. Dabei wird zwischen einer Übergangsregelverletzung und einer Zustandsregelverletzung einer verletzbaren Regel unterschieden.

Eine Übergangsregelverletzung betrifft eine Regel, die einen Zustandsübergang betrifft. Gemäß dem obigen Beispiel entspricht die Regel 2 "Wenn auf Fahrspur a, wechsle nicht zur Fahrspur b" einer Überprüfung auf einen Zustandsübergang, nämlich, ob der betrachtete Trajektorienabschnitt einen Wechsel der Fahrspur vorsieht.

Eine Zustandsregelverletzung liegt vor, wenn die Regel eine Unzulässigkeit eines Zustands des Fahrzeugs 1 angibt. Beispielsweise liegt eine Zustandsregelverletzung eines Trajektorienabschnitts vor, wenn sich das Fahrzeug 1 an einer durch eine verletzbare Regel angegebenen unzulässigen Position befindet. Gemäß dem obigen Beispiel entspricht eine Verletzung der Regel "Fahre nicht auf einer Fahrspur in entgegengesetzter Fahrtrichtung." durch einen entsprechenden Trajektorienabschnitt einer Zustandsregelverletzung.

Für einen Satz von verletzbaren Regeln R werden nun Verletzungskosten VK zugeordnet. Die Verletzungskosten geben für Zustandsregelverletzungen einen zeitabhängigen Betrag $VK_{var,i,r}$ an, so dass sich die Verletzungskosten umso höher sind je länger der Systemzustand, der die jeweilige Zustandsregel verletzt, andauert. Dagegen geben die Verletzungskosten für eine Übergangsregelverletzung einen festen Kostenbetrag $VK_{fix,i,r}$ an, der zeitunabhängig ist, da der Übergang zwischen Systemzuständen keiner Zeitdauer zugeordnet werden kann.

Die Verletzungskosten $VK_{var,i,r}$, $VK_{fix,i,r}$ können für jede der verletzbaren Regeln fest vorgegeben werden, wobei in der Regel gilt, dass wenn $VK_{var,i,r} \neq 0$ ist $VK_{fix,i,r} = 0$ ist und umgekehrt.

In Schritt S4 wird eine Bewegungstrajektorie aus den Trajektorienkandidaten ausgewählt, die die geringsten Kosten gemäß der obigen Kostenfunktion aufweist.

In Schritt S5 wird das Fahrzeug 1 gemäß der ermittelten Trajektorie bewegt.

Die Unterscheidung der Verletzungskosten in Übergangsregelverletzungen und Zustandsregelverletzungen ermöglicht eine angemessene Berücksichtigung von Verletzungskosten auch für Zustandsregelverletzungen, deren Betrag von der Zeitdauer, in der die Regelverletzung vorliegt, bestimmt ist.

Diese Art der Berücksichtigung von Verletzungskosten kann bereits in der Trajektorienplanung berücksichtigt werden, wenn das verwendete Verfahren die Gesamtkosten zum Aufbau der zu ermittelnden Bewegungstrajektorie verwendet.

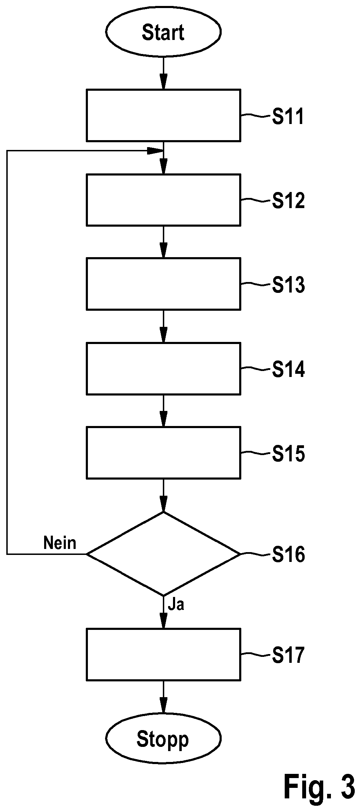

Beispielsweise kann die obige Kostenberechnung bei einem abtastbasierten Suchverfahren, wie z.B. einem Rapidly Exploring Random Tree (RRT*)-Verfahren, berücksichtigt werden, das anhand des Flussdiagramms der Figur 3 näher erläutert wird.

Im Folgenden wird ein Rapidly Exploring Random Tree (RRT*)-Verfahren zum Bestimmen einer optimalen Bewegungstrajektorie für das Fahrzeug 1 erläutert. Das Rapidly-Exploring Random Tree (RRT*) - Verfahren ist ein probabilistischer Ansatz zum Lösen einer Trajektorienplanung. Es wird dabei hilfsweise virtuell ein Baum konstruiert, dessen Knoten einer Position des Fahrzeugs und dessen Äste den Trajektorienabschnitten entsprechen. Jedem Knoten kann zudem ein Gesamtkostenwert zugeordnet werden.

Der Baum wird konstruiert, indem dieser solange durch eine zufallsbestimmte Heuristik im Zustandsraum mit neuen Knoten erweitert wird, bis ein Zielzustand erreicht wird. Die Erweiterung des Baumes wird dabei nur zugelassen, wenn keine der nicht-verletzbaren Regeln verletzt wird. Der Pfad der Trajektorie ergibt sich durch Rückwärtsbetrachtung ausgehend von dem gefundenen Zielzustand (Endknoten) hin zu dem Ausgangspunkt (Startknoten).

Im Detail wird in Schritt S11 von einem Anfangsknoten ausgegangen, der einer bestimmten vorgegebenen Fahrzeugposition entspricht.

Zum Erstellen eines neuen Knotens, wird in Schritt S12 zunächst gemäß einer Zufallszahlfunktion ein zufälliger Knoten gewählt, der eine beliebige Position des Fahrzeugs 1 im Betrachtungsraum angeben kann.

Ausgehend von dem neuen Knoten wird in Schritt S13 aus dem bestehenden Baum derjenige Nachbarknoten innerhalb eines vorgegebenen Abstands ausgehend von dem neuen Knoten gesucht, der

- keine nicht-verletzbare Regel verletzt,
- gemäß einem Bewegungsmodell des Fahrzeugs möglich ist (keine spitzen Winkel zu einem vorangehenden Trajektorienabschnitt fahrbar), und
- gemäß der Gesamtkosten der bisher gebildeten Trajektorie des Baumes minimal ist.

Die Gesamtkosten ergeben sich aus den dem betreffenden Nachbarknoten zugeordneten Kosten zuzüglich der Kosten für den Trajektorienabschnitt (der neuen Kante des Baums) zu dem neuen Knoten. Derjenige Nachbarknoten, mit dem sich eine Trajektorie mit den geringsten Gesamtkosten ergibt, wird als Vorgängerknoten für den neuen Knoten gewählt.

Hierbei werden bei der Ermittlung der Kosten auch die Verletzungskosten wie oben in Bezug auf das Verfahren der Figur 2 beschrieben ermittelt. Dabei wird entsprechend ermittelt, ob die Berücksichtigung des Trajektorienabschnitt zwischen dem neuen Knoten und dem betrachteten Nachbarknoten eine Verletzung einer verletzbaren Regel darstellt. Stellt eine erkannte Regelverletzung eine Zustandsregelverletzung dar, so wird eine Zeitdauer zum Bewegen des Fahrzeugs 1 entlang des betrachteten Trajektorienabschnitts in an sich bekannter Weise aus Fahrzustandsdaten für die Position des Vorgängerknotens, Streckeneigenschaften und dergleichen bestimmt und die Kosten entsprechend abhängig von einem zeitabhängigen Betrag $VK_{var,i,r}$ der Verletzungskosten beaufschlagt (multipliziert) mit der Zeitdauer bestimmt.

Stellt eine erkannte Regelverletzung eine Übergangsregelverletzung dar, so werden die Kosten entsprechend abhängig von einem festen Kostenbetrag $VK_{fix,i,r}$ der Verletzungskosten bestimmt.

In Schritt S14 wird der Knoten entsprechend gesetzt und mit dem gefundenen gewählten Vorgängerknoten durch einen entsprechenden Trajektorienabschnitt verbunden.

In Schritt S15 kann nun überprüft werden, ob über den neuen Knoten andere bereits gesetzte Knoten des Baumes mit geringerer Gesamtkosten erreicht werden können. Dabei werden alle oder ein Teil der bereits gesetzten (betrachteten) Knoten überprüft. Dies erfolgt unter Annahme einer Verbindung, d.h. Trajektorienabschnitt, des neuen Knotens zu dem betrachteten Knoten und eine Ermittlung der entsprechenden Gesamtkosten. Sind die neu berechneten Gesamtkosten geringer als die dem betrachteten Knoten zuvor zugeordneten Gesamtkosten, so wird die Verbindung, d.h. Trajektorienabschnitt des betrachteten Knotens zu seinem Vorgängerknoten aufgelöst und der neue Knoten mit dem betrachteten Knoten über eine entsprechende Verbindung (Trajektorienabschnitt) verbunden.

In Schritt S16 wird überprüft, ob die Zielbedingung erfüllt bzw. die Zielposition erreicht ist. Ist die Zielbedingung nicht erfüllt (Alternative: Nein), so wird das Verfahren mit Schritt S12 fortgesetzt, andernfalls wird das Verfahren mit Schritt S17 fortgesetzt.

In Schritt S17 wird das Fahrzeug 1 entlang der gefundenen Trajektorie bewegt.

Durch das obige an sich bekannte RRT* - Verfahren ist es möglich, für die Trajektorienplanung verletzbare Regeln durch eine Anpassung der Gesamtkosten zu berücksichtigen, wobei die Verletzungskosten bei einer Zustandsregelverletzung abhängig von einer Zeitdauer, während diese Regelverletzung vorliegt, bestimmt werden. Dagegen werden Regelverletzungen, die Zustandsübergänge betreffen, als fester Kostenbetrag ohne Zeitbezug bei der Berechnung der Gesamtverletzungskosten berücksichtigt.

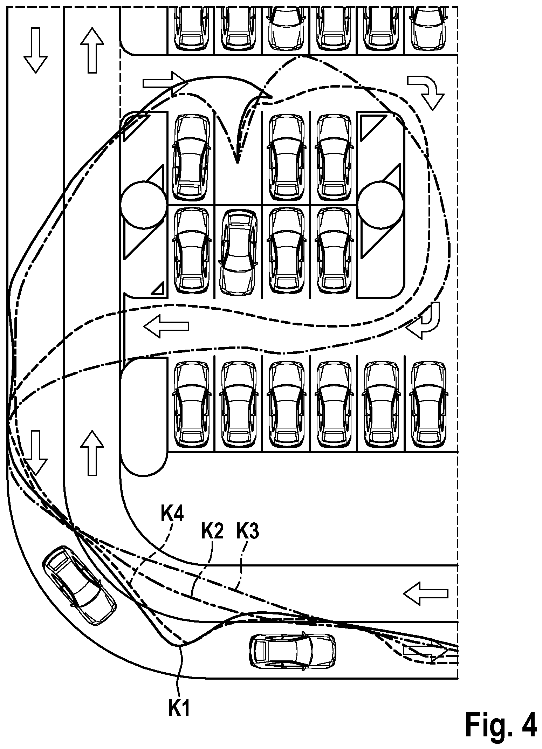

In der oben skizzierten Beispielsituation soll ein Fahrzeug aus einer Parklücke zu einer Ausfahrt des Parkplatzes gelangen, und dazu soll eine Trajektorienplanung durchgeführt werden. Die Situation ist in Figur 4 dargestellt, wobei auf der Fahrspur für die auswärtige Richtung zwei parkende Fahrzeuge vorhanden sind. Die Zielbedingung entspricht, dass das Fahrzeug auf der richtigen Fahrbahn und in der richtigen Richtung den Parkplatz rechts unten verlassen soll. Die nicht verletzbaren Bedingungen entsprechen der Bedingung, dass das Fahrzeug nicht über andere Fahrzeuge oder sonstige bauliche Hindernisse fahren darf. Die Regeln entsprechen:

Regel 1:     Das Fahrzeug soll immer nicht in der falschen Richtung auf der Fahrspur fahren
Regel 2:     Das Fahrzeug soll Spurwechsel möglichst vermeiden.

Wie in Figur 4 gezeigt, ergeben sich vier Trajektorien für unterschiedliche Kostenbeträge für Regelverletzungen.

| Regel1/Regel2 | Kein Spurwechsel $VK_{var,i,r} = 1$ | Kein Spurwechsel $VK_{var,i,r} = 50$ |
|---|---|---|
| Falsche Fahrtrichtung $VK_{fix,i,r} = 0$ | K1 | K2 |
| Falsche Fahrtrichtung $VK_{fix,i,r} = 10$ | K4 | K3 |

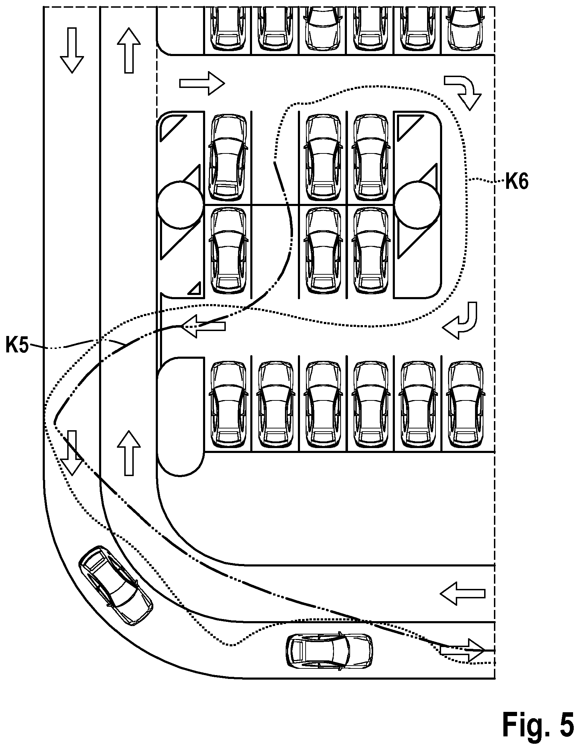

Die resultierenden Kurven K1 bis K4 entsprechen den jeweiligen aus der Tabelle entnehmbaren Gewichtungen.
Um die Flexibilität des Verfahrens zu verdeutlichen, kann dieses um eine Regel erweitert werden, nach der ein Überfahren eines freien Parkplatzes nicht zulässig ist. Diese Regel kann mit einem variablen Kostenbetrag versehen werden. In Kombination mit den beiden zuvor definierten Regeln ergeben sich die in Figur 5 dargestellten Trajektorienverläufe K5, K6 für beispielhaft ausgewählte zwei Kostenbeträge (K5: niedriger Kostenbetrag, K6: hoher Kostenbetrag) für die dritte Regel. Man erkennt, dass je nach Gewichtung die Trajektorienplanung vorsieht, dass der freie Parkplatz überfahren werden kann.

**Patentansprüche**

1.   Computerimplementiertes Verfahren zum Bestimmen einer Bewegungstrajektorie für ein bewegliches Objekt, insbesondere eines Fahrzeugs (1), in einem regelbasierten Trajektorienplanungssystem,

wobei eine Trajektorienplanung basierend auf einer Minimierung von Gesamtkosten gemäß einer Kostenfunktion durchgeführt wird, um die Bewegungstrajektorie zu bestimmen,
wobei die Kostenfunktion Verletzungskosten berücksichtigt, die sich für jeden Trajektorienabschnitt der Bewegungstrajektorie aus einer etwaigen jeweiligen Verletzung einer oder mehrerer verletzbaren Regeln bezüglich des Trajektorienabschnitts ergeben,
wobei die Regelverletzung eine Zustandsregelverletzung und eine Übergangsregelverletzung umfasst,
wobei die Zustandsregelverletzung eine Verletzung einer Zustandsregel angibt, die einen unzulässigen Zustand des beweglichen Objekts angibt, und
wobei die Übergangsregelverletzung eine Verletzung einer Übergangsregel angibt, die einen unzulässigen Zustandsübergang des betrachteten Trajektorienabschnitts angibt, wobei die Übergangsregel angibt, ob der betrachtete Trajektorienabschnitt einen Wechsel der Fahrspur vorsieht;
wobei der Zustandsregelverletzung ein zeitabhängiger Kostenbetrag der Verletzungskosten und der Übergangsregelverletzung ein fester, insbesondere zeitunabhängiger Kostenbetrag der Verletzungskosten zugeordnet ist, so dass die Gesamtkosten für eine Bewegungstrajektorie für jeden Trajektorienabschnitt, der eine verletzbare Regel verletzt, von dem der verletzten Regel zugeordneten zeitabhängigen oder festen Kostenbetrag abhängen.

2.   Verfahren nach Anspruch 1, wobei der zeitabhängige Kostenbetrag durch Multiplikation mit einer Zeitdauer ermittelt wird, die zum Bewegen des Objektes entlang des betreffenden Trajektorienabschnittes benötigt wird.

3.   Verfahren nach Anspruch 1 oder 2, wobei die Trajektorienplanung die Ermittlung mehrerer Trajektorienkandidaten umfasst, aus denen derjenige Trajektorienkandidat als Bewegungstrajektorie ausgewählt wird, der die geringsten Gesamtkosten aufweist.

4.   Verfahren nach einem der Ansprüche 1 bis 3, wobei die Trajektorienplanung ein abtastbasiertes Suchverfahren, insbesondere ein RRT*-Verfahren umfasst.

5. Verfahren nach Anspruch 4, wobei die Trajektorienplanung das Erstellen eines Baumes umfasst, dessen Knoten Zustände und/oder Positionen des Objekts angeben und dessen Kanten Trajektorienabschnitte zwischen den Positionen der betreffenden Knoten angeben, wobei die Erstellung des Baumes folgende Schritte umfasst:

- Bereitstellen eines neuen Knotens, der einer Abtastposition des Objektes entspricht,
- Bestimmen von mehreren Pfaden von dem neuen Knoten zu dem Anfangsknoten des Baumes;
- Ermitteln von Gesamtkosten für die mehreren Pfade;
- Verbinden des neuen Knotens mit demjenigen Vorgängerknoten, der dem Pfad mit den geringsten Gesamtkosten angehört.

6. Verfahren nach Anspruch 5, wobei für bereits gesetzte Knoten mithilfe der Kostenfunktion überprüft wird, ob diese durch den neuen Knoten mit geringeren Kosten erreicht werden können, und wobei, wenn dies der Fall ist, diese mit dem neuen Knoten verbunden werden.

7. Verfahren nach einem der Ansprüche 1 bis 6, wobei die Kostenfunktion gemäß einem Optimierungsziel formuliert ist, das die Zeitdauer zum Befahren der jeweiligen Trajektorienabschnitt berücksichtigt.

8. Computerimplementiertes Verfahren zum Führen eines beweglichen Objekts entlang einer Bewegungstrajektorie, die gemäß einem der Verfahren nach einem der Ansprüche 1 bis 7 ermittelt wird.

9. Verfahren nach Anspruch 8, wobei abhängig von der Bewegungstrajektorie Lenkeingriffe und Vorwärtsbewegungen des beweglichen Objekts gesteuert werden.

10. Verfahren nach Anspruch 8, wobei abhängig von der Bewegungstrajektorie Fahranweisungen zum Führen des es beweglichen Objekts ausgegeben werden.

11. Vorrichtung zum Bestimmen einer Bewegungstrajektorie für ein bewegliches Objekt, insbesondere eines Fahrzeugs, in einem regelbasierten Trajektorienplanungssystem, wobei die Vorrichtung ausgebildet ist, eine Trajektorienplanung basierend auf einer Minimierung von Gesamtkosten gemäß einer Kostenfunktion durchzuführen, um die Bewegungstrajektorie zu bestimmen,

wobei die Kostenfunktion Verletzungskosten berücksichtigt, die sich für jeden Trajektorienabschnitt der Bewegungstrajektorie aus einer etwaigen jeweiligen Verletzung einer oder mehrerer verletzbaren Regeln bezüglich des Trajektorienabschnitts ergeben,
wobei die Regelverletzung eine Zustandsregelverletzung und eine Übergangsregelverletzung umfasst, wobei die Zustandsregelverletzung eine Verletzung einer Zustandsregel angibt, die einen unzulässigen Zustand des beweglichen Objekts angibt, und die Übergangsregelverletzung eine Verletzung einer Übergangsregel angibt, die einen unzulässigen Zustandsübergang des betrachteten Trajektorienabschnitts , angibt, wobei die Übergangsregel angibt, ob der betrachtete Trajektorienabschnitt einen Wechsel der Fahrspur vorsieht;
wobei der Zustandsregelverletzung ein zeitabhängiger Kostenbetrag der Verletzungskosten und der Übergangsregelverletzung ein fester, insbesondere zeitunabhängiger Kostenbetrag der Verletzungskosten zugeordnet ist, so dass die Gesamtkosten für eine Bewegungstrajektorie für jeden Trajektorienabschnitt, der eine verletzbare Regel verletzt, von dem der verletzten Regel zugeordneten zeitabhängigen oder festen Kostenbetrag abhängen.

12. Bewegliches Objekt, insbesondere Fahrzeug (1), mit einer Vorrichtung nach Anspruch 11, einem Antriebssystem (3), einem Lenksystem (4) und einer Sensorik (5) zur Erfassung der Umgebung des Objekts, wobei die Vorrichtung abhängig von Umgebungszuständen, insbesondere Positionen von Umgebungsobjekten und Umgebungsbereichen, das Antriebssystem (3) und das Lenksystem (4) ansteuert, um das Objekt entlang der bestimmten Bewegungstrajektorie zu bewegen.

13. Computerprogramm, das, wenn es in einer Datenverarbeitungseinrichtung ausgeführt wird, alle Schritte eines Verfahrens nach einem der Ansprüche 1 bis 9 durchführt.

14. Maschinenlesbares Speichermedium, auf welchem ein Computerprogramm nach Anspruch 13 gespeichert ist.

**Claims**

1. Computer-implemented method for determining a motion trajectory for a movable object, in particular a vehicle (1), in a rule-based trajectory planning system,

   wherein trajectory planning is performed based on minimizing total costs in line with a cost function in order to determine the motion trajectory,
   wherein the cost function takes into account violation costs that result, for each trajectory section of the motion trajectory, from any respective violation of one or more violable rules with respect to the trajectory section,
   wherein the rule violation comprises a state rule violation and a transition rule violation,
   wherein the state rule violation indicates a violation of a state rule indicating an impermissible state of the movable object, and
   wherein the transition rule violation indicates a violation of a transition rule indicating an impermissible state transition of the trajectory section in question, wherein the transition rule indicates whether the trajectory section in question provides for a lane change;
   wherein the state rule violation is assigned a time-dependent cost amount of the violation costs and the transition rule violation is assigned a fixed, in particular time-independent cost amount of the violation costs, such that the total costs for a motion trajectory, for each trajectory section that violates a violable rule, depend on the time-dependent or fixed cost amount assigned to the violated rule.

2. Method according to Claim 1, wherein the time-dependent cost amount is ascertained by multiplying by a duration required for the object to move along the trajectory section in question.

3. Method according to Claim 1 or 2, wherein the trajectory planning comprises ascertaining multiple candidate trajectories, from which the candidate trajectory having the lowest total costs is selected as motion trajectory.

4. Method according to one of Claims 1 to 3, wherein the trajectory planning comprises a sampling-based search method, in particular an RRT* method.

5. Method according to Claim 4, wherein the trajectory planning comprises creating a tree the nodes of which indicate states and/or positions of the object and the edges of which indicate trajectory sections between the positions of the nodes in question, wherein creating the tree comprises the following steps:

   - providing a new node corresponding to a sampling position of the object,
   - determining multiple paths from the new node to the starting node of the tree;
   - ascertaining total costs for the multiple paths;
   - connecting the new node to the predecessor node belonging to the path with the lowest total costs.

6. Method according to Claim 5, wherein the cost function is used to check, for nodes that have already been set, whether these are able to be reached by the new node with lower costs, and wherein, if so, these are connected to the new node.

7. Method according to one of Claims 1 to 6, wherein the cost function is formulated in line with an optimization objective that takes into account the duration taken to travel the respective trajectory section.

8. Computer-implemented method for guiding a movable object along a motion trajectory that is ascertained in line with one of the methods according to one of Claims 1 to 7.

9. Method according to Claim 8, wherein steering interventions and forward movements of the movable object are controlled depending on the motion trajectory.

10. Method according to Claim 8, wherein driving instructions for guiding the movable object are output depending on the motion trajectory.

11. Device for determining a motion trajectory for a movable object, in particular a vehicle, in a rule-based trajectory planning system, wherein the device is designed to perform trajectory planning based on minimizing total costs in line with a cost function in order to determine the motion trajectory,

wherein the cost function takes into account violation costs that result, for each trajectory section of the motion trajectory, from any respective violation of one or more violable rules with respect to the trajectory section, wherein the rule violation comprises a state rule violation and a transition rule violation, wherein the state rule violation indicates a violation of a state rule indicating an impermissible state of the movable object, and the transition rule violation indicates a violation of a transition rule indicating an impermissible state transition of the trajectory section in question, wherein the transition rule indicates whether the trajectory section in question provides for a lane change;

wherein the state rule violation is assigned a time-dependent cost amount of the violation costs and the transition rule violation is assigned a fixed, in particular time-independent cost amount of the violation costs, such that the total costs for a motion trajectory, for each trajectory section that violates a violable rule, depend on the time-dependent or fixed cost amount assigned to the violated rule.

12. Movable object, in particular vehicle (1), having a device according to Claim 11, a drive system (3), a steering system (4) and a sensor system (5) for capturing the surroundings of the object, wherein the device actuates the drive system (3) and the steering system (4) depending on surrounding states, in particular positions of surrounding objects and surrounding areas, in order to move the object along the determined motion trajectory.

13. Computer program that performs all of the steps of a method according to one of Claims 1 to 9 when it is executed in a data processing apparatus.

14. Machine-readable storage medium on which a computer program according to Claim 13 is stored.

**Revendications**

1. Procédé mis en œuvre par ordinateur pour déterminer une trajectoire de déplacement pour un objet mobile, en particulier d'un véhicule (1), dans un système de planification de trajectoire à base de règles,

une planification de trajectoire étant réalisée sur la base d'une minimisation de coûts totaux selon une fonction de coût afin de déterminer la trajectoire de déplacement,
la fonction de coût tenant compte de coûts de violation qui résultent, pour chaque segment de trajectoire de la trajectoire de déplacement, d'une éventuelle violation respective d'une ou de plusieurs règles violables relatives au segment de trajectoire,
la violation de règle comprenant une violation de règle d'état et une violation de règle de transition,
la violation de règle d'état indiquant une violation d'une règle d'état qui spécifie un état inadmissible de l'objet mobile,
la violation de règle de transition indiquant une violation d'une règle de transition qui spécifie une transition d'état inadmissible du segment de trajectoire considéré, la règle de transition spécifiant si le segment de trajectoire considéré prévoit un changement de voie de circulation ;
dans lequel il est attribué à la violation de règle d'état un montant de coûts dépendant du temps pour les coûts de violation et à la violation de règle de transition un montant de coûts fixe, en particulier indépendant du temps, pour les coûts de violation, de sorte que les coûts totaux pour une trajectoire de déplacement, pour chaque segment de trajectoire qui viole une règle, dépendent du montant de coûts dépendant du temps ou fixe attribué à la règle violée.

2. Procédé selon la revendication 1, dans lequel le montant de coûts dépendant du temps est déterminé par multiplication par une durée qui est nécessaire pour déplacer l'objet le long du segment de trajectoire concerné.

3. Procédé selon la revendication 1 ou 2, dans lequel la planification de trajectoire comprend la détermination de plusieurs candidats de trajectoire, parmi lesquels est sélectionné, comme trajectoire de déplacement, le candidat de trajectoire ayant les coûts totaux les plus faibles.

4. Procédé selon l'une quelconque des revendications 1 à 3, dans lequel la planification de trajectoire comprend un procédé de recherche à base d'échantillonnage, en particulier un procédé RRT*.

5. Procédé selon la revendication 4, dans lequel la planification de trajectoire comprend l'établissement d'un arbre dont les nœuds indiquent des états et/ou des positions de l'objet et dont les arêtes indiquent des segments de trajectoire entre les positions des nœuds concernés, l'établissement de l'arbre comprenant les étapes consistant à :

- fournir un nouveau nœud qui correspond à une position d'échantillonnage de l'objet ;
- déterminer de multiples chemins du nouveau nœud vers le nœud de départ de l'arbre ;
- déterminer des coûts totaux pour lesdits multiples chemins ;
- relier le nouveau nœud à celui des nœuds prédécesseurs qui appartient au chemin ayant les coûts totaux les plus faibles.

6. Procédé selon la revendication 5, dans lequel il est vérifié pour les nœuds déjà placés, à l'aide de la fonction de coût, si lesdits nœuds peuvent être atteints par le biais du nouveau nœud avec des coûts plus faibles, et dans lequel, si tel est le cas, ceux-ci sont reliés au nouveau nœud.

7. Procédé selon l'une quelconque des revendications 1 à 6, dans lequel la fonction de coût est formulée selon un objectif d'optimisation qui tient compte de la durée nécessaire pour parcourir le segment de trajectoire respectif.

8. Procédé mis en œuvre par ordinateur pour guider un objet mobile le long d'une trajectoire de déplacement qui est déterminée par l'un des procédés selon l'une quelconque des revendications 1 à 7.

9. Procédé selon la revendication 8, dans lequel des manœuvres de direction et des déplacements vers l'avant de l'objet mobile sont commandés en fonction de la trajectoire de déplacement.

10. Procédé selon la revendication 8, dans lequel des instructions de conduite destinées à guider l'objet mobile sont délivrées en fonction de la trajectoire de déplacement.

11. Dispositif pour déterminer une trajectoire de déplacement pour un objet mobile, en particulier d'un véhicule, dans un système de planification de trajectoire à base de règles, le dispositif étant conçu pour réaliser une planification de trajectoire sur la base d'une minimisation de coûts totaux selon une fonction de coût afin de déterminer la trajectoire de déplacement,

la fonction de coût tenant compte de coûts de violation qui résultent, pour chaque segment de trajectoire de la trajectoire de déplacement, d'une éventuelle violation respective d'une ou de plusieurs règles violables relatives au segment de trajectoire,
la violation de règle comprenant une violation de règle d'état et une violation de règle de transition, la violation de règle d'état indiquant une violation d'une règle d'état qui spécifie un état inadmissible de l'objet mobile, et la violation de règle de transition indiquant une violation d'une règle de transition qui spécifie une transition d'état inadmissible du segment de trajectoire considéré, la règle de transition indiquant si le segment de trajectoire considéré prévoit un changement de voie de circulation ;
dans lequel il est attribué à la violation de règle d'état un montant de coûts dépendant du temps pour les coûts de violation et à la violation de règle de transition un montant de coûts fixe, en particulier indépendant du temps, pour les coûts de violation, de sorte que les coûts totaux pour une trajectoire de déplacement, pour chaque segment de trajectoire qui viole une règle, dépendent du montant de coûts dépendant du temps ou fixe attribué à la règle violée.

12. Objet mobile, en particulier véhicule (1), comprenant un dispositif selon la revendication 11, un système d'entraînement (3), un système de direction (4) et un système de capteurs (5) destiné à détecter l'environnement de l'objet, le dispositif commandant le système d'entraînement (3) et le système de direction (4) en fonction d'états de l'environnement, en particulier de positions d'objets environnants et de zones environnantes, afin de déplacer l'objet le long de la trajectoire de déplacement déterminée.

13. Programme informatique qui, lorsqu'il est exécuté dans un dispositif de traitement de données, met en œuvre toutes les étapes d'un procédé selon l'une quelconque des revendications 1 à 9.

14. Support de stockage lisible par machine sur lequel est stocké un programme informatique selon la revendication 13.

1

**Fig. 1**

Start

S1

S2

S3

S4

S5

Stopp

**Fig. 2**

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **L. I. REYES CASTRO et al.** Incremental sampling-based algorithm for minimum-violation motion planning. *52nd IEEE Conference on Decision and Control*, December 2013, 3217-3224

- **C.-I. VASILE et al.** Minimum-violation scLTL motion planning for mobility-on-demand. *IEEE International Conference on Robotics and Automation (ICRA)*, May 2017, 1481-1488